(19) Europäisches Patentamt
European Patent Office
Office européen des brevets

(11) **EP 1 815 286 B1**

(12) **EUROPEAN PATENT SPECIFICATION**

(45) Date of publication and mention
of the grant of the patent:
**14.05.2008 Bulletin 2008/20**

(51) Int Cl.:
***G02B 26/02*** (2006.01)  ***G02B 1/06*** (2006.01)
***G02B 3/14*** (2006.01)  ***G02B 5/06*** (2006.01)

(21) Application number: **05819848.2**

(22) Date of filing: **07.11.2005**

(86) International application number:
**PCT/IB2005/053643**

(87) International publication number:
**WO 2006/054198 (26.05.2006 Gazette 2006/21)**

(54) **CONTROLLABLE OPTICAL COMPONENT**

STEUERBARE OPTISCHE KOMPONENTE

ELEMENT OPTIQUE POUVANT ETRE COMMANDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.11.2004 GB 0425611**

(43) Date of publication of application:
**08.08.2007 Bulletin 2007/32**

(73) Proprietor: **Koninklijke Philips Electronics N.V.
5621 BA Eindhoven (NL)**

(72) Inventors:
 • **HELWEGEN, Ivon F.,**
 **c/o Philips I.P. & Standards
 Redhill,
 Surrey RH1 5HA (GB)**
 • **KUIPER, Stein,**
 **c/o Philips I.P. & Standards
 Redhill,
 Surrey RH1 5HA (GB)**
 • **DERKS, Henk,**
 **c/o Philips I.P. & Standards
 Redhill,
 Surrey RH1 5HA (GB)**
 • **HENDRIKS, B.H.W.,**
 **c/o Philips I.P. & Standards
 Redhill,
 Surrey RH1 5HA (GB)**

(74) Representative: **Schouten, Marcus Maria
Philips
Intellectual Property & Standards
P.O. Box 220
5600 AE Eindhoven (NL)**

(56) References cited:
**WO-A-03/045556**  **WO-A-03/088198**
**US-A- 4 783 155**

**Description**

This invention relates to a controllable optical component, in particular using the so-called electrowetting principle (also known as electrocapillarity). The invention relates for example to optical lenses or diaphragms.

An electrowetting lens comprises a chamber housing two non-miscible liquids, such as an electrically insulating oil and a water based conducting salt solution, and the meniscus between these fluids defines a refractive index boundary and therefore performs a lens function. The shape of the meniscus is electrically controllable to vary the power of the lens. The fluid may comprise a liquid, vapour, gas, plasma or a mixture thereof.

The electrical control of the lens shape is achieved using an outer annular control electrode, and the electrowetting effect is used to control the contact angle of the meniscus at the inside edge of the chamber, thereby changing the meniscus shape.

The basic design and operation of an electrowetting lens will be well known to those skilled in the art. By way of example, reference is made to WO 03/069380.

Electrowetting lenses are compact and can provide a variable focusing function without any mechanical moving parts. They have been proposed in various applications, particularly where there are space limitations and where power consumption is to be kept to a minimum, for example for use in mobile phone cameras.

Electrowetting lenses have also been recognised as good candidates for use as autofocus camera lenses. An advantage of the electrowetting lens over conventional autofocus lenses is a high focusing speed. It is typically possible to change focus from an object at infinity towards an object at 5cm within 10ms.

Electrowetting lenses are actuated electrostatically and therefore use very little power when driven by a dc voltage. However, they require a voltage much higher than voltages supplied by batteries, and the driver circuitry that generates the required voltages has significant power consumption. In particular, a dc-to-dc converter is required to supply these voltages.

According to the invention, there is provided a controllable optical system, comprising:

an optical component comprising a chamber housing first and second fluids, the interface between the fluids defining a boundary surface and an electrode arrangement for electrically controlling the shape of the boundary surface;
a drive circuit for controlling the signals applied to the electrode arrangement, and operable in an operative mode and an inoperative, power saving mode;
a drive signal storage capacitor for maintaining a signal on the electrode arrangement when the drive circuit is in the inoperative mode;
a sensing arrangement for sensing a boundary surface condition; and
a feedback control loop for switching the drive circuit between the operative mode and the inoperative, power saving mode, in dependence on the sensing arrangement output.

The system of the invention provides power saving by intermittently operating the drive circuit. The switching between operative states of the drive circuit is controlled in dependence on a boundary surface condition, so that the correct functioning of the system is ensured for different operative conditions. This boundary surface may define a lens surface or a diaphragm opening.

The drive signal storage capacitor is designed to ensure that the ripple as a result of the intermittent operation on the electrode arrangement signal is within desired boundaries. This will depend on various parameters, such as the drive condition of the lens (for example if the lens is being driven to a steady state condition or if focus changes are taking place) and the extent to which the lens has aged. The feedback system enables these factors to be taken into account.

The feedback control loop preferably comprises a timing generator for providing an enable signal to the drive circuit, and this signal may have a controllable duty cycle and/or frequency, and may be synchronised with the frame rate of the image sensor.

The feedback control loop may additionally be for controlling the electrode arrangement drive signals to implement an autofocus function in a lens system. Furthermore, the same lens setting sensing arrangement can be used for providing an autofocus feedback signal.

The sensing arrangement may comprise a capacitance sensing arrangement for measuring a capacitance between first and second electrodes of the electrode arrangement.

Alternatively, the sensing arrangement can comprise an image sensor, voltage measurement circuitry for measuring an electrode arrangement voltage or current measurement circuitry for measuring a current flowing to the electrode arrangement.

The invention also provides a method of driving a controllable optical component, the component comprising a chamber housing first and second fluids, the interface between the fluids defining a boundary surface and an electrode arrangement for electrically controlling the shape of the boundary surface, wherein the method comprises:

sensing a boundary surface condition; and

controlling the electrode arrangement to cycle between operative and inoperative states, wherein in the operative state an electrode arrangement drive signal is provided to the electrode arrangement, and in the inoperative state the electrode arrangement drive signal is provided by a storage capacitor, the cyclic control of the electrode arrangement being controlled in dependence on the sensed boundary condition.

Examples of the invention will now be described in detail with reference to the accompanying drawings, in which:

Figure 1 shows a known design of electrowetting lens;
Figure 2 shows parameters of the lens to help explain the operation of the lens;
Figure 3 shows a known autofocus camera using an electrowetting lens;
Figure 4 shows a simplified circuit diagram of a lens and additional storage capacitor used in the system and method of the invention;
Figure 5 shows an example of lens system in accordance with the invention;
Figure 6 is used to explain how the lens is controlled; and
Figure 7 shows a known design of electrowetting diaphragm to which the invention may be applied.

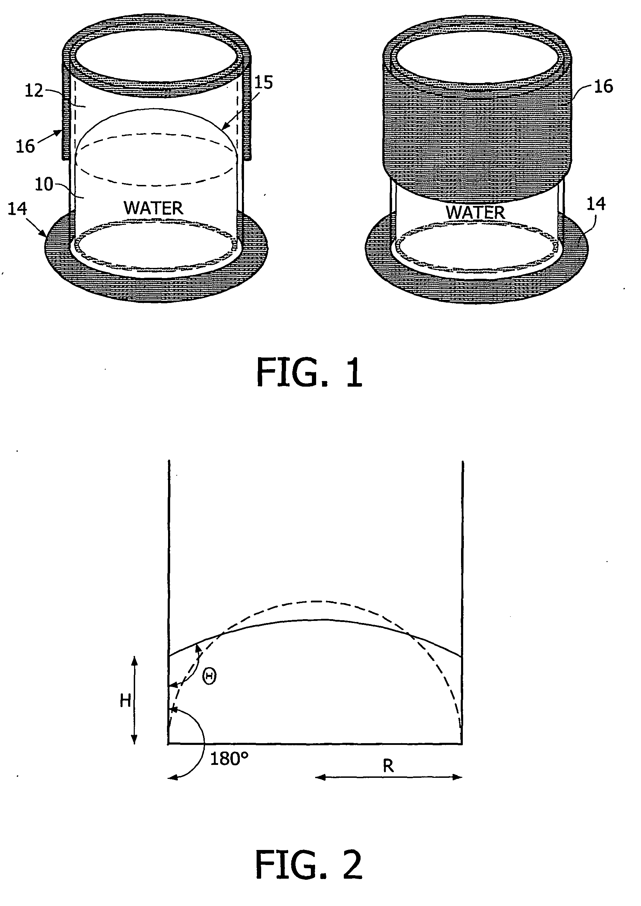

Figure 1 schematically shows a known electrowetting lens design, and Figure 2 shows parameters which define the lens shape.

The left part of Figure 1 shows the interior of the lens. The lens comprises a chamber which houses an electrically susceptible liquid (e.g. polar, conductive or polarisable) such as a salted water based component 10 (referred to below simply as the water) and a nonconductive liquid such as an oil based component 12 (referred to below simply as the oil). A bottom electrode 14 and a circumferential side electrode 16 control the power of the lens. The side electrode is separated from the liquid by an insulator which forms the side wall of the chamber, and this insulator acts as a capacitor dielectric layer during electrical operation of the lens. This operation will be well known to those skilled in the art, and reference is made to WO 03/069380.

The optical power of an electrowetting lens is determined by the radius of the meniscus formed at the interface of the two liquids. The radius can be derived from the contact angle θ (shown in Figure 2) of the meniscus at the wall. This contact angle is governed by the relation:

$$\gamma_{ci} \cos\theta = \gamma_{wc} - \gamma_{wi} + \frac{1}{2}\frac{\varepsilon_0 \varepsilon_r}{d} V^2 \qquad (1),$$

where θ is the angle the meniscus makes with the wall, V the voltage applied, $\gamma_{ci}$ is the water/oil surface tension, $\gamma_{wc}$ is the wall/water surface tension and $\gamma_{wi}$ is the wall/oil surface tension, $\varepsilon_r$ the permeability of the insulating layer (the chamber wall) and d its thickness. As a result, the radius of the meniscus is directly related to the voltage applied, and the lens is thus a voltage controlled device.

High voltages are required to drive the lens (of the order of 100V) and for this reason, the driver circuit is the main contributor to the power consumption of the lens system.

The invention provides power saving by intermittently operating the drive circuit, and storing the drive signal on a storage capacitor. The switching between operative/inoperative states of the drive circuit is controlled in dependence on a lens setting condition, so that the correct functioning of the system is ensured for different operative conditions.

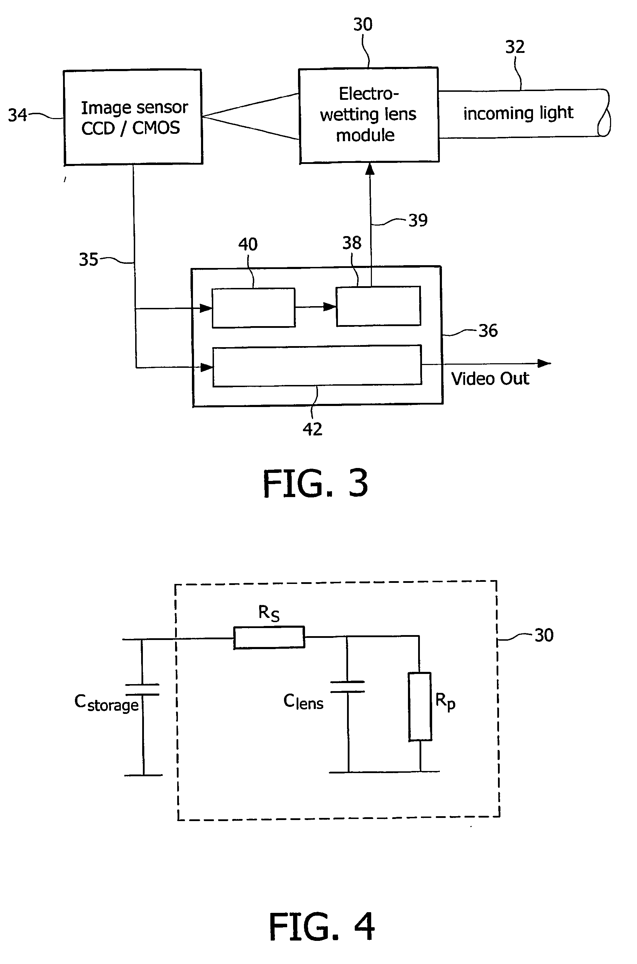

Before describing a lens system of the invention (as one preferred application of the invention), a conventional autofocus lens system will be described with reference to Figure 3, which shows a block diagram of a known autofocus electrowetting lens camera.

The camera comprises a lens module 30 which receives incoming light and focuses the image onto an image sensor 34 in the form of a CCD or image sensor array.

The electrowetting lens module 30 contains a number of conventional lenses in addition to the electrowetting lens, and a driver to generate the high voltage signals to focus an image at a specific distance. The driver may in fact be external to the lens/camera module 30.

The image sensor 34 senses the incoming light and converts it to an electrical signal that can be stored in a memory, for example in RGB or YUV format.

A signal processor 36 includes an autofocus algorithm 38, a sharpness detection device 40 and a video signal processor 42. The sharpness signal is derived from the high frequency content of the image. The autofocus algorithm 38 derives a focus error signal from differences in the sharpness signals at specific moments, and a control loop of the autofocus algorithm 38 generates a lens driver signal 39 to drive the lens.

The invention provides a control system in which the drive circuit is operated intermittently. In order to derive a drive scheme which minimises the power consumption, it is first necessary to analyse the lens charging characteristics. These determine the ripple on the lens drive voltage if this voltage is supplied by a storage capacitor.

Figure 4 shows a simple equivalent circuit diagram of an electrowetting lens. The lens can be modelled as a series resistance $R_S$, together with the lens capacitance $C_{lens}$ in parallel with a parallel resistance $R_P$. The series resistance $R_S$ does not influence the discharge process and can therefore be neglected. The time it takes to discharge the lens is dependent on the capacitance $C_{lens}$ defined by the dielectric coating (area, thickness and dielectric constant), and the parallel resistance $R_P$, which is defined by leakage through the dielectric coating. Each lens may have some differences in these two values, so that the discharge time of each lens may differ. The discharge time may also depend on environmental conditions such as temperature and humidity, and external and internal insulators used will also influence these effects. Furthermore, leakage can occur between PCB conductors, shortening the discharge time as well.

If the lens is driven from a storage capacitor, there will be a change in lens focus as the voltage drops due to capacitor discharge. There is also a need to charge the capacitor initially to the operating voltages. Figure 4 also shows an additional capacitor $C_{storage}$ used to store the electrode drive voltage, to enable the intermittent operation of the drive circuit.

A practical value for the lens capacitance $C_{lens}$ is 100 pF and for the lens resistance $R_{parallel}$ is 100 MΩ. The additional storage capacitor $C_{storage}$ may have a capacitance of 10 nF, by way of example.

The driver IC is required to generate a driving voltage of about 100 V from the (typically) 2.5 V supply voltage, and consumes approximately 24 mW. The majority of this power consumption is due to switching losses for generating the high voltage inside the driver and is not caused by driving the lens.

For the calculations below, it is assumed that a discharge of $C_{lens}$ of 1 % is allowed, and that this voltage ripple will not adversely influence the imaging characteristics. Thus, when the lens is focussed with 100V, the driver can be switched off until the voltage over the lens is 99 V.

The time it takes to re-charge $G_{lens}$ and $C_{storage}$ from 99 to 100 V depends on the internal resistance of the power supply. It can be assumed that this takes of the order of 100 μs.

The discharge time can be calculated with the following formula:

$$U_1 = U_0 e^{\frac{t}{R_{parallel}(C_{lens} + C_{storage})}} \text{, where } U_1 = 99 \text{ V and } U_0 = 100\text{V}.$$

The oscillation period can be set using this equation. With the example figures given, the discharge time (to 99%) is 10 ms. This can be used to set the oscillation frequency with which the drive circuit is controlled.

The power consumption of the lens and driver becomes:

$$(100 \text{ μs}/10 \text{ ms}) \times 24 \text{ mW} = 0.24 \text{ mW}.$$

Thus, the use of a sufficiently large storage capacitor, together with the appropriate switching electronics, enables the power consumption to be decreased by a factor 100.

One possible implementation of an intermittent drive scheme is to base the drive scheme on a worst-case scenario, that is safe for every lens in every situation. This approach is simple to implement, and requires no feedback control. This does not, however, optimise the power savings. This will also provide a slower start-up.

The preferred approach of the invention is to provide feedback so that the drive scheme can be tailored to the prevailing conditions, and different start up drive conditions can also be provided.

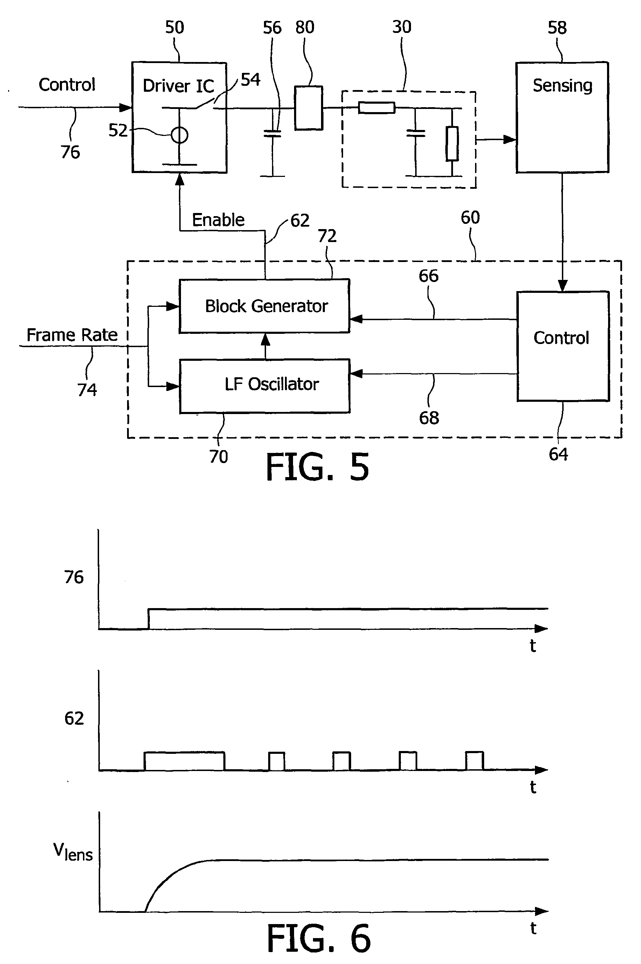

Figure 5 shows a system of the invention.

The drive circuit 50 is shown separately, and comprises a high voltage source 52 and a switch 54 for controlling the application of the high voltage to the lens 30 and additional storage capacitor 56. In accordance with the invention, a sensing arrangement 58 is provided, and this forms part of a feedback control loop which controls the drive circuit 50.

The sensing arrangement 58 detects a lens setting, and this may be direct detection of the physical shape of the lens, or else it may be based on analysis of the image captured by the lens. In each case, the sensing arrangement 58 provides a feedback signal for the control system 60 which provides an enable signal 62 to the drive circuit 50. The control system 60 is typically implemented as a PI-controller of a micro-controller or digital signal processor. The control system 60 determines the switching frequency for the enable signal 62 and also the duty cycle of this signal.

In the example shown in Figure 5, the control system 60 comprises a digital signal processor 64 which provides a duty cycle signal 66 and a frequency signal 68. The frequency signal 68 controls a low frequency oscillator 70, and this oscillator signal is used by a block waveform generator 72 under the control of the duty cycle signal 66.

In practice, the units 70 and 72 can be implemented as a single timing controller, having three inputs (frame rate for synchronisation 74, frequency 68 and duty cycle 66). The output from the timing controller is again the enable signal 62.

The control system 60 is also controlled in dependence on the frame rate, provided as input 74.

During initial (startup) operation of the lens system, the enable signal 62 is kept high to enable a fast response as the lens charges to an operating voltage. When the desired lens voltage, or a stable lens condition, is detected by the sensing arrangement 58, the control system operates to a closed loop control mode, and the enable signal 62 is modulated to provide power savings.

The drive circuit 50 also has a control input 76, and this goes high when the lens system is turned on.

Figure 6 is used to show the operation of the system of the invention, and shows the waveforms applied to the enable input 62, the control input 76 and the resulting lens voltage $V_{lens}$.

As shown in Figure 6, the enable signal 62 has an initial ON period while the lens voltage charges to a steady state value. Subsequently, a periodic enable signal 62 is used to maintain the desired lens voltage.

The initial pulse provides a start-up condition to enable a fast initial response time.

As shown above, the oscillation period is set depending on the RC time constant of the lens and additional capacitor arrangement. As a result of differences between lenses and environmental conditions (such as temperature and humidity) this oscillation frequency may need to be calibrated periodically.

To perform this calibration, the lens capacitance and additional capacitance can be charged, and the drive circuit 50 then turned off. Time can then be measured until the lens is discharged to a certain level, from which the RC time constant can be calculated. In particular,

$$t_{discharge} \approx 5 \times R_P (C_{lens} + C_{storage})$$

.

It is not necessary to completely discharge the capacitances in order to determine the RC time constant.

The determined RC time constant can then be used in the manner explained above to obtain the desired oscillation frequency.

The oscillator 70 and the enable signal 62 need to be synchronized with the frame rate of the lens system, and this is the purpose of the frame rate input 74 in Figure 5. In particular, the driver circuit must be disabled when the sensor is reading out a frame of captured data.

As outlined above, the invention uses a feedback of the lens condition in order to determine the appropriate control of the driver circuit.

It has already been recognised that sensing the lens condition is desirable, to provide a feedback control function for other purposes. For example, due to slow charging of the insulators (between the electrodes and the fluids) the relation between the voltage and the exact position of the oil-water meniscus is subject to drift, and a feedback system can compensate for this. A conventional electrowetting lens has a bottom electrode and a circumferential wall electrode. It has been proposed that the capacitance across the electrodes can be measured to provide feedback about the shape of the lens. In particular, the shape and the position of the meniscus changes when a voltage is applied, so that the effective size of the annular electrode changes (the effective size depends on the area of water in contact with the electrode, which changes as the meniscus position changes). A resulting change in capacitance can be measured, and this capacitance has been considered to be a reasonably accurate parameter for measuring the optical power of the lens. Sensing the lens conditions in this way has been proposed in the past as a way of maintaining a constant focal depth over time.

This capacitive sensing approach can also be used to provide the required feedback signal. Because the additional capacitor is large compared to the lens capacitance, a small capacitance difference does need to be detected. A bridge circuit can be used for this purpose.

An alternative approach is to use the existing image sensor to measure a change in focus of a specific object. Again, this information can be used as a feedback signal for the control system.

In this case, if the camera or the object move relatively to each other, the focus of the object will also change, and this will require refocusing by the autofocus control loop, rather than repetition of the same drive voltage. The system therefore requires intelligence to distinguish between a required refocusing operation, or a required recharging operation. This additional intelligence can easily be provided. For example, objects can be recognised, or the content of the image can be detected. If the sharpness of an object changes even when the object maintains an identical size and shape, then the lens is discharging and the driver circuit needs to be enabled. If the sharpness changes and the object appearance also changes, then the autofocus algorithm needs to be operated.

A further alternative is to use voltage measurement of the electrode arrangement drive voltage. Measuring voltage using a high impedance measurement circuit will not significantly influence the discharge time, and a FET source-follower circuit can be used for this purpose. The voltage measurement operation will itself consume power, and to reduce the overall power consumption, this measurement can be sampled.

A further possibility is to measure the current flowing to (or from) the lens. The voltage drop can be obtained by measuring the current flow through the additional capacitance, by applying a resistance in series with the additional capacitor and measuring the voltage across the resistor. Again, this current measurement will also consume power, and can therefore be sampled, to minimise this additional power consumption.

Alternative to the feedback measurements described above, the charge flow needed to charge the additional storage capacitor when the drive circuit is switched on can be measured, and this provides an indication of the leakage currents, and can thereby determine the standby time of the driver circuit.

The lens may comprise a more complicated electrode arrangement than the simple base and annular electrodes as in the example above.

The invention can be applied to the use of electrowetting lenses in cameras, for example for mobile telephones. Other uses of electrowetting lenses will however be apparent to those skilled in the art, such as in production lines or other object processing operations, where image analysis or image projection is required.

Multiple optical lenses can be used in optical arrangements. For example, a electrowetting zoom lens can be formed from two lens elements.

The invention may be used within an optical diaphragm, for providing a variable size optically transmissive opening.

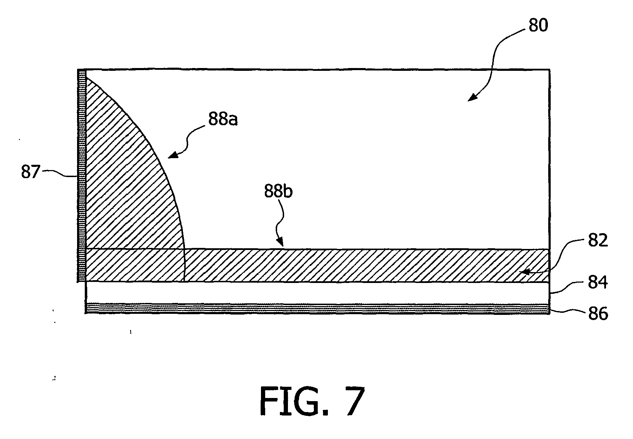

Figure 7 shows schematically the known operation of an optical diaphragm, and this has a similar structure to a lens, but with one of the two fluids non-transparent. Control of the shape of the boundary between the fluids can then be used to change the size of the optically transmissive opening.

As shown in Figure 7, the diaphragm system also has first and second fluids 80,82. The fluid 82 (which is the electrically susceptible fluid) is non-transparent. The system has a base electrode 86 which will of course be transparent, and a side wall electrode 87. A dielectric layer is also shown as 84. The side wall electrode is typically on one side only of a rectangular chamber, and is thus non-symmetrical.

Two possible boundary fluid boundaries are shown in Figure 7, and these are the extremes between which the device may be controlled. In boundary position 88a, the opaque liquid 82 partially blocks the passage of light, but there is an area allowing light to pass. In boundary position 88b, the opaque liquid 82 completely blocks the passage of light. This, the electrodes 86,87 can be used to provide a controllable diaphragm function.

The additional capacitor introduced for storing the drive voltage will typically be at least 10 times larger than the lens capacitance, and preferably 100 times larger or more. Although it will preferably be implemented as an additional circuit element, it is also possible to alter the lens or diaphragm (or other switchable optical component) design to provide much higher capacitance, for example through the use of different dielectric coatings. This is intended to be within the scope of the invention, so that the drive signal storage capacitor may be an integral part of the materials used in the design.

A dc drive scheme as described above has the advantage of low charge flow, as repeated charging operations as in an ac drive scheme are not required. However, due to the physical properties of the materials, insulator charging can occur, leading to a deterioration in the lens properties. This-can be overcome by applying a reverse polarity short pulse periodically. This can remove excessive charge build up but a sufficiently short duration can be used to avoid change in the boundary shape. This pulse can, for example, be generated by connecting the lens to a full bridge circuit, and this optional element is shown as 80 in Figure 5.

Only one detailed example has been given above, and in respect of a lens system. Other applications and detailed implementations will be apparent to those skilled in the art.

## Claims

1. A controllable optical system, comprising:

   an optical component (30) comprising a chamber housing first and second fluids (10,12), the interface between the fluids defining a boundary surface (15;88a,88b) and an electrode arrangement (14,16) for electrically controlling the shape of the boundary surface;
   a drive circuit for controlling the signals applied to the electrode arrangement, and operable in an operative mode and an inoperative, power saving mode;
   a drive signal storage capacitor for maintaining a signal on the electrode arrangement when the drive circuit is in the inoperative mode;

a sensing arrangement for sensing a boundary surface condition; and

a feedback control loop for switching the drive circuit between the operative mode and the inoperative, power saving mode, in dependence on the sensing arrangement output.

**2.** A system as claimed in claim 1, wherein the feedback control loop comprises a waveform generator for providing an enable signal to the drive circuit.

**3.** A system as claimed in claim 2, wherein the waveform generator has a controllable duty cycle and/or frequency.

**4.** A system as claimed in any preceding claim, wherein the sensing arrangement comprises a capacitance sensing arrangement for measuring a capacitance between first and second electrodes (14,16) of the electrode arrangement.

**5.** A system as claimed in any one of claims 1 to 3, wherein the sensing arrangement comprises voltage measurement circuitry for measuring an electrode arrangement voltage.

**6.** A system as claimed in any one of claims 1 to 3, wherein the sensing arrangement comprises current measurement circuitry for measuring a current flowing to the electrode arrangement.

**7.** A system as claimed in any preceding claim, comprising a controllable optical lens system, wherein the optical component (30) comprises a lens (30) and the boundary surface (15) comprises a lens surface.

**8.** A system as claimed in claim 7, wherein the feedback control loop is additionally for controlling the electrode arrangement drive signals to implement an autofocus function.

**9.** A system as claimed in claim 7 or 8, wherein the sensing arrangement comprises an image sensor.

**10.** A system as claimed in any preceding claim, wherein the electrode arrangement comprises a drive electrode arrangement comprising a base electrode (14) and a side wall electrode (16).

**11.** A system as claimed in claim 10, wherein the side wall electrode (16) comprises an annular electrode which surrounds the chamber.

**12.** A system as claimed in any preceding claim, wherein the first fluid comprises an electrically susceptible liquid and the second fluid comprises an electrically non-susceptible liquid, and wherein both of the first and second fluids are substantially optically transparent.

**13.** A system as claimed in any one of claims 1 to 6, comprising an controllable optical diaphragm system, wherein the optical component comprises a diaphragm and the boundary surface (88a,88b) defines a diaphragm orifice.

**14.** A system as claimed in claim 13, wherein the electrode arrangement comprises a drive electrode arrangement comprising a base electrode (86) and a side wall electrode (87).

**15.** A system as claimed in claim 14, wherein the side wall electrode (87) is non-symmetrical.

**16.** A system as claimed in any one of claims 13 to 15, wherein the first fluid comprises an electrically susceptible liquid and the second fluid comprises an electrically non-susceptible liquid, and wherein one (80) of the first and second fluids is substantially optically transparent and the other (82) of the first and second fluids is substantially optically non-transparent.

**17.** A method of driving a controllable optical component, the component comprising a chamber housing first and second fluids (14,16), the interface between the fluids defining a boundary surface (15;88a,88b) and an electrode arrangement (14,16) for electrically controlling the shape of the boundary surface, wherein the method comprises:

sensing a boundary surface condition; and

controlling the electrode arrangement to cycle between operative and inoperative states, wherein in the operative state an electrode arrangement drive signal is provided to the electrode arrangement, and in the inoperative state the electrode arrangement drive signal is provided by a storage capacitor, the cyclic control of the electrode arrangement being controlled in dependence on the sensed boundary condition.

**18.** A method as claimed in claim 17, wherein the frequency with which the electrode arrangement is cycled is selected in dependence on the sensed boundary condition.

**19.** A method as claimed in claim 17 or 18, wherein the duty cycle with which the electrode arrangement is cycled is selected in dependence on the sensed boundary condition.

**20.** A method as claimed in one of claims 17 to 19, wherein sensing the boundary surface condition comprises measuring a capacitance between first and second electrodes (14,16) of the electrode arrangement.

**21.** A method as claimed in any one of claims 17 to 19, wherein sensing the boundary surface condition comprises measuring an electrode arrangement voltage.

**22.** A method as claimed in any one of claims 17 to 19, wherein sensing the boundary surface condition comprises measuring a current flowing to the electrode arrangement.

**23.** A method as claimed in any one of claims 17 to 22, for driving a controllable optical lens system, wherein the boundary surface (15) comprises a lens surface.

**24.** A method as claimed in claim 23, further comprising controlling the electrode arrangement drive signals to implement an autofocus function.

**25.** A method as claimed in claims 23 or 24, wherein sensing a lens setting comprises using an image sensor to detect the focus condition of a captured image.

**26.** A method as claimed in any one of claims 17 to 22, for driving a controllable optical diaphragm system, wherein the optical component (30) comprises a diaphragm and the boundary surface (88a,88b) defines a diaphragm orifice.

**27.** A method as claimed in any one of claims 17 to 26, wherein dc voltages are applied to the electrode arrangement, and wherein the method further comprises applying reverse polarity pulses to the electrode arrangement.

**Patentansprüche**

**1.** Steuerbares optisches System, aufweisend:

eine optische Komponente (30) mit einer Kammer, die ein erstes und ein zweites Fluid (10, 12), wobei die Berührungsfläche zwischen den Fluids eine Grenzfläche (15; 88a, 88b) definiert, und eine Elektrodenanordnung (14, 16) zum elektrischen Steuern der Form der Grenzfläche enthält;
eine Antriebsschaltung zum Steuern der an die Elektrodenanordnung angelegten Signale und die in einem operativen Modus und einem inoperativen, Energie sparenden Modus betrieben werden kann;
einen Antriebssignalspeicherkondensator zum Führen eines Signals an der Elektrodenanordnung, wenn sich die Antriebsschaltung im inoperativen Modus befindet; Abtastanordnung zum Abtasten eines Grenzflächenzustands; und
eine Rückkopplungssteuerschleife zum Umschalten der Antriebsschaltung zwischen dem operativen und dem inoperativen, Energie sparenden Modus abhängig von der Ausgabe der Abtastanordnung.

**2.** System nach Anspruch 1, wobei die Rückkopplungssteuerschleife einen Wellenformgenerator zum Bereitstellen eines Aktivierungssignals an die Antriebsschaltung aufweist.

**3.** System nach Anspruch 2, wobei der Wellenformgenerator einen steuerbaren Betriebsartzyklus und/oder eine steuerbare Frequenz aufweist.

**4.** System nach einem der vorhergehenden Ansprüche, wobei die Abtastanordnung eine die Kapazität abtastende Anordnung zum Messen einer Kapazität zwischen einer ersten und zweiten Elektrode (14, 16) der Elektrodenanordnung aufweist.

**5.** System nach einem der Ansprüche 1 bis 3, wobei die Abtastanordnung Spannungsmessungsschaltungen zum Messen einer Spannung der Elektrodenanordnung aufweist.

**6.** System nach einem der Ansprüche 1 bis 3, wobei die Abtastanordnung Strommessschaltungen zum Messen eines zu der Elektrodenanordnung fließenden Stroms aufweist.

**7.** System nach einem der vorhergehenden Ansprüche, aufweisend ein steuerbares optisches Linsensystem, wobei die optische Komponente (30) eine Linse (30) und die Grenzfläche (15) eine Linsenfläche aufweist.

**8.** System nach Anspruch 7, wobei die Rückkopplungssteuerschleife zusätzlich zum Steuern der Antriebssignale der Elektrodenanordnung zur Implementation einer Autofokusfunktion vorgesehen ist.

**9.** System nach Anspruch 7 oder 8, wobei die Abtastanordnung einen Bildsensor aufweist.

**10.** System nach einem der vorhergehenden Ansprüche, wobei die Elektrodenanordnung eine Antriebselektrodenanordnung mit einer Basiselektrode (14) und einer Seitenwandelektrode (16) aufweist.

**11.** System nach Anspruch 10, wobei die Seitenwandelektrode 16 eine ringförmige Elektrode, die die Kammer umgibt, aufweist.

**12.** System nach einem der vorhergehenden Ansprüche, wobei das erste Fluid eine elektrisch empfindliche Flüssigkeit und das zweite Fluid eine elektrisch nicht empfindliche Flüssigkeit aufweist, und wobei sowohl das erste als auch das zweite Fluid im Wesentlichen optisch transparent sind.

**13.** System nach einem der Ansprüche 1 bis 6, aufweisend ein steuerbares optisches Diaphragmasystem, wobei die optische Komponente ein Diaphragma aufweist und die Grenzfläche (88a, 88b) eine Diaphragmaöffnung definiert.

**14.** System nach Anspruch 13, wobei die Elektrodenanordnung eine Antriebselektrodenanordnung mit einer Basiselektrode (86) und einer Seitenwandelektrode (87) aufweist.

**15.** System nach Anspruch 14, wobei die Seitenwandelektrode (87) nicht symmetrisch ist.

**16.** System nach einem der Ansprüche 13 bis 15, wobei das erste Fluid eine elektrisch empfindliche Flüssigkeit und das zweite Fluid eine elektrisch nicht empfindliche Flüssigkeit aufweist und wobei eines (80) des ersten und zweiten Fluids im Wesentlichen optisch transparent gegenüber dem anderen (82) des ersten und zweiten Fluids ist, welches optisch nicht transparent ist.

**17.** Verfahren zum Antreiben einer steuerbaren optischen Komponente, wobei die Komponente eine Kammer aufweist, die ein erstes und ein zweites Fluid (14, 16) enthält, wobei die Schnittstelle zwischen den Fluids eine Grenzfläche (15; 88a, 88b) und eine Elektrodenanordnung (14, 16) zum elektrischen Steuern der Form der Grenzfläche aufweist, wobei das Verfahren folgendes aufweist:

Abtasten eines Grenzflächenzustands; und
Steuern der Elektrodenanordnung, um zyklisch zwischen einem operativen und einem inoperativen Status zu wechseln, wobei in dem operativen Status ein Elektrodenanordnungsantriebssignal der Elektrodenanordnung bereitgestellt wird und in dem inoperativen Status das Elektrodenanordnungsantriebssignal von einem Speicherkondensator bereitgestellt wird, wobei die zyklische Steuerung der Elektrodenanordnung in Abhängigkeit von der erfassten Grenzbedingung gesteuert wird.

**18.** Verfahren nach Anspruch 17, wobei die Frequenz, mit der die Elektrodenanordnung zyklisch gewechselt wird, in Abhängigkeit von dem erfassten Grenzzustand ausgewählt wird.

**19.** Verfahren nach Anspruch 17 oder 18, wobei der Betriebszustandzyklus, mit dem die Elektrodenanordnung zyklisch gewechselt wird, in Abhängigkeit von der erfassten Grenzbedingung ausgewählt wird.

**20.** Verfahren nach einem der Ansprüche 17 bis 19, wobei das Abtasten des Grenzflächenzustands das Messen einer Kapazität zwischen der ersten und der zweiten Elektrode (14, 16) der Elektrodenanordnung aufweist.

**21.** Verfahren nach einem der Ansprüche 17 bis 19, wobei das Abtasten der Grenzflächenbedingung das Messen einer Elektrodenanordnungsspannung aufweist.

**22.** Verfahren nach einem der Ansprüche 17 bis 19, wobei das Abtasten der Grenzflächenbedingung das Messen eines zu der Elektrodenanordnung fließenden Stroms aufweist.

**23.** Verfahren nach einem der Ansprüche 17 bis 22 zum Antreiben eines steuerbaren optischen Linsensystems, wobei die Grenzfläche (15) eine Linsenoberfläche aufweist.

**24.** Verfahren nach Anspruch 23, ferner umfassend das Steuern der Elektrodenanordnungsantriebssignale zum Implementieren einer Autofokusfunktion.

**25.** Verfahren nach Anspruch 23 oder 24, wobei das Abtasten einer Linseneinstellung das Verwenden eines Bildsensors zum Erfassen des Fokuszustands eines erfassten Bilds aufweist.

**26.** Verfahren nach einem der Ansprüche 17 bis 22 zum Antreiben eines steuerbaren optischen Diaphragmasystems, wobei die optische Komponente (30) ein Diaphragma aufweist und die Grenzfläche (88a, 88b) eine Diaphragmaöffnung definiert.

**27.** Verfahren nach einem der Ansprüche 17 bis 26, wobei Gleichstromspannungen an die Elektrodenanordnung angelegt werden und wobei das Verfahren ferner das Anlegen umgekehrter Polaritätspulse an die Elektrodenanordnung aufweist.

**Revendications**

**1.** Système optique pouvant être commandé, comprenant :

un composant optique (30) comprenant une chambre contenant un premier fluide et un second fluide (10, 12), l'interface entre les fluides définissant une surface limite (15 ; 88a, 88b) et un système d'électrodes (14, 16) pour commander électriquement la forme de la surface limite ;
un circuit pilote pour commander les signaux appliqués au système d'électrodes et pouvant fonctionner en mode opérant et en mode inopérant d'économie d'énergie ;
un condensateur de stockage de signal pilote pour maintenir un signal sur le système d'électrodes lorsque le circuit pilote est en mode inopérant ;
un dispositif de détection pour capter un état de surface limite ; et
une boucle de commande à rétroaction pour commuter le circuit pilote entre le mode opérant et le mode inopérant d'économie d'énergie en fonction de la sortie du dispositif de détection.

**2.** Système selon la revendication 1, dans lequel la boucle de commande à rétroaction comprend un générateur de formes d'onde pour délivrer un signal d'autorisation au circuit pilote.

**3.** Système selon la revendication 2, dans lequel le générateur de formes d'onde a un cycle et/ou une fréquence opératoire pouvant être commandé(e).

**4.** Système selon l'une quelconque des revendications précédentes, dans lequel le dispositif de détection comprend un dispositif de détection de capacité pour mesurer une capacité entre une première et une seconde électrodes (14, 16) du système d'électrodes.

**5.** Système selon l'une quelconque des revendications 1 à 3, dans lequel le dispositif de détection comprend un circuit de mesure de tension pour mesurer une tension de système d'électrodes.

**6.** Système selon l'une quelconque des revendications 1 à 3, dans lequel le dispositif de détection comprend un circuit de mesure de courant pour mesurer un courant s'écoulant vers le système d'électrodes.

**7.** Système selon l'une quelconque des revendications précédentes, comprenant un système de lentille optique pouvant être commandé, dans lequel le composant optique (30) comprend une lentille (30) et la surface limite (15) comprend une surface de lentille.

**8.** Système selon la revendication 7, dans lequel la boucle de commande à rétroaction sert de plus à commander les signaux pilotes du système d'électrodes pour mettre en oeuvre une fonction de mise au point automatique.

**9.** Système selon la revendication 7 ou 8, dans lequel le dispositif de détection comprend un capteur d'images.

**10.** Système selon l'une quelconque des revendications précédentes, dans lequel le système d'électrodes comprend un système d'électrodes pilote comprenant une électrode de base (14) et une électrode de paroi latérale (16).

**11.** Système selon la revendication 10, dans lequel l'électrode de paroi latérale (16) comprend une électrode annulaire qui entoure la chambre.

**12.** Système selon l'une quelconque des revendications précédentes, dans lequel le premier fluide comprend un liquide électriquement sensible et le second fluide comprend un liquide non électriquement sensible et dans lequel à la fois les premier et second fluides sont sensiblement transparents au plan optique.

**13.** Système selon l'une quelconque des revendications 1 à 6, comprenant un système de diaphragme optique pouvant être commandé, dans lequel le composant optique comprend un diaphragme et la surface limite (88a, 88b) définit un orifice de diaphragme.

**14.** Système selon la revendication 13, dans lequel le système d'électrodes comprend un système d'électrodes pilote comprenant une électrode de base (86) et une électrode de paroi latérale (87).

**15.** Système selon la revendication 14, dans lequel l'électrode de paroi latérale (87) n'est pas symétrique.

**16.** Système selon l'une quelconque des revendications 13 à 15, dans lequel le premier fluide comprend un liquide électriquement sensible et le second fluide comprend un liquide non électriquement sensible et dans lequel l'un (80) des premier et second fluides est sensiblement transparent au plan optique et l'autre (82) des premier et second fluides n'est sensiblement pas transparent au plan optique.

**17.** Procédé de pilotage d'un composant optique pouvant être commandé, le composant comprenant une chambre contenant un premier fluide et un second fluide (14, 16), l'interface entre les fluides définissant une surface limite (15 ; 88a, 88b) et un système d'électrodes (14, 16) pour commander électriquement la forme de la surface limite, dans lequel le procédé comprend :

la détection d'un état de surface limite ; et
la commande du système d'électrodes sur un cycle entre des états opérant et inopérant, dans laquelle, à l'état opérant, un signal pilote du système d'électrodes est fourni au système d'électrodes et, à l'état inopérant, le signal pilote du système d'électrodes est fourni par un condensateur de stockage, la commande cyclique du système d'électrodes étant commandée en fonction de l'état limite capté.

**18.** Procédé selon la revendication 17, dans lequel la fréquence à laquelle le système d'électrodes suit un cycle est sélectionnée en fonction de l'état limite détecté.

**19.** Procédé selon la revendication 17 ou 18, dans lequel le cycle opératoire selon lequel le système d'électrodes suit un cycle est sélectionné en fonction de l'état limite détecté.

**20.** Procédé selon l'une quelconque des revendications 17 à 19, dans lequel la détection de l'état de surface limite comprend la mesure d'une capacité entre les première et seconde électrodes (14, 16) du système d'électrodes.

**21.** Procédé selon l'une quelconque des revendications 17 à 19, dans lequel la détection de l'état de surface limite comprend la mesure d'une tension du système d'électrodes.

**22.** Procédé selon l'une quelconque des revendications 17 à 19, dans lequel la détection de l'état de surface limite comprend la mesure d'un courant s'écoulant vers le système d'électrodes.

**23.** Procédé selon l'une quelconque des revendications 17 à 22, pour piloter un système de lentille optique pouvant être commandé, dans lequel la surface limite (15) comprend une surface de lentille.

**24.** Procédé selon la revendication 23, comprenant en outre la commande des signaux pilotes du système d'électrodes pour mettre en oeuvre une fonction de mise au point automatique.

**25.** Procédé selon la revendication 23 ou 24, dans lequel la détection d'un réglage de lentille comprend l'utilisation d'un capteur d'images pour détecter l'état de mise au point d'une image capturée.

**26.** Procédé selon l'une quelconque des revendications 17 à 22, pour piloter un système de diaphragme optique pouvant être commandé, dans lequel le composant optique (30) comprend un diaphragme et la surface limite (88a, 88b) définit un orifice de diaphragme.

**27.** Procédé selon l'une quelconque des revendications 17 à 26, dans lequel des tensions cc sont appliquées au système d'électrodes et dans lequel le procédé comprend en outre l'application d'impulsions de polarité inverse au système d'électrodes.

FIG. 1

FIG. 2

FIG. 3

FIG. 4

FIG. 5

FIG. 6

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03069380 A